Europäisches Patentamt

European Patent Office

Office européen des brevets

(11) Publication number: **0 063 923**
**A1**

## (12) EUROPEAN PATENT APPLICATION

(21) Application number: **82302054.0**

(22) Date of filing: **22.04.82**

(51) Int. Cl.³: **B 29 D 3/02**

(30) Priority: **25.04.81 GB 8112819**

(43) Date of publication of application: **03.11.82**
**Bulletin 82/44**

(84) Designated Contracting States: **AT BE DE FR IT NL SE**

(71) Applicant: **FYPOL CONSULTANTS LIMITED, 8, Yarm Road, Stockton-on-Tees Cleveland (GB)**

(72) Inventor: **Rollinson, Eric Albert, 16, First Avenue, Bridlington (GB)**

(74) Representative: **Long, Edward Anthony et al, Hulse & Co. Cavendish Buildings West Street, Sheffield S1 1ZZ (GB)**

(54) **Building component.**

(57) A method of making a building or like component 14 of reinforced polyester resin comprises utilizing an open-topped mould 1 defining the component perimeter and having a base 4 with a generally flat, upper surface 5 interrupted by a plurality of parallel, elongate recesses 6 extending substantially end-to-end of the mould; covering the recesses 6 with a permeable reinforcing element 8; applying a flowable, filled polyester resin mix 9 to the permeable reinforcing element 8; pressing a reinforcing bar 10 into each slot 6 such that each slot 6 becomes lined with a generally "U"-shaped portion of first reinforcing element 8, the reinforcing element 8 being provided in one or more pieces such that it extends uninterruptedly from side-to-side of the mould 1 transversly of the reinforcing bars 10; applying further flowable, filled polyester resin mix 12 to the permeable reinforcing element 8; and laying second permeable reinforcing material 13 on the further resin mix 12 and allowing the component 14 to cure before removing the component 14 from the mould 1.

- 1 -

This invention relates to building and like components and to methods of making the same.

In British Patent Specification 1,324,681 is described a method of manufacturing a building or like component in polyester resin. Such components have proved satisfactory in applications where strength in a direction transversely of the slots is required. In other applications, strength in both the transverse and longitudinal directions is required.

According to the present invention, a method of making a building or like component of reinforced polyester resin comprises:utilising an open topped mould defining the component perimeter and having a base with a generally flat, upper surface interrupted by a plurality of parallel, elongate recesses extending substantially end-to-end of the mould;covering the recesses with a permeable reinforcing element; applying a flowable, filled polyester resin mix to the permeable reinforcing element; pressing a reinforcing bar into each slot such that each slot becomes lined with a generally "U"-shaped portion of first reinforcing element, the reinforcing element being provided in one or more pieces such that it extends uninterruptedly from side to side of the mould transversly of the reinforcing bars; applying
further flowable, filled polyester resin mix to
the permeable reinforcing element; and laying
second permeable reinforcing material to the
further resin mix, and allowing the component to
cure before removing the component from the mould.

The invention also includes a building
or like component manufactured by the above
defined method.

The invention thus provides a component
exhibiting satisfactory strength characteristics
in both longitudinal and transverse directions,
hence providing a component having a wider field of
application than the uni-directional strength panel
described in British Patent Specification 1,324,681
and its attendant limitations.

The edge to edge extension of the first,
permeable reinforcing element may be effected in
several ways.    In theory a single sheet of reinforcing
element could be employed, of dimensions exceeding the
lateral dimension of the mould by an amount to be
pressed into the recesses such that thereafter, the
lateral dimension of the reinforcing element is
slightly less than the corresponding mould dimension.
However, from the practical viewpoint it is simpler to employ pre-cut strips of reinforcing element,
the strips being of such width that, after being
pressed into their respective recesses, strip
edges project from the recesses and lie along the
flat base, the projection being such that mutually
adjacent edges overlap one another.  Alternatively,
but again employing the strip concept, the
projection may not overlap and the resulting gaps
may be filled by bridging strips extending along
the flat base and overlapping two adjacent strip edges.

The resin preferably includes a filler
which settles upon standing.  Preferably, the mix
comprises three parts ~~resin~~ *filler* to one part ~~filler~~ *resin*.
The ~~latter~~ *former* conveniently consists of silica sand, e.g.
<90 mesh B.S.S.  The mix, if made in the U.K., would
also require additions of accelerator and catalyst,
as is well known in the art, to achieve curing in
a reasonable time period.  However, such additions
may be unnecessary in hotter climates.  In detail
(and for U.K. manufacture) a 3:1 sand: resin mix,
when employing a proprietary unaccelerated resin
may require.

a)        styrene monomer in a quantity of <10% of *the*
          resin

b)        0.5 cc of 6% cobalt accelerator per
          pound of mix

(c)     a catalyst (e.g. BUTANOX M50) in a quantity of 4 cc per pound of mix

Although the reinforcing element could be wire mesh, hessian, fabric, sacking, it is preferred that fibre glass matting is employed which is readily capable of being wetted by the above resinous mixes, e.g. 1 oz/ft$^2$ of chopped malting is suitable.

The invention will now be described in greater detail, by way of examples, with reference to the accompanying drawings, in which:-

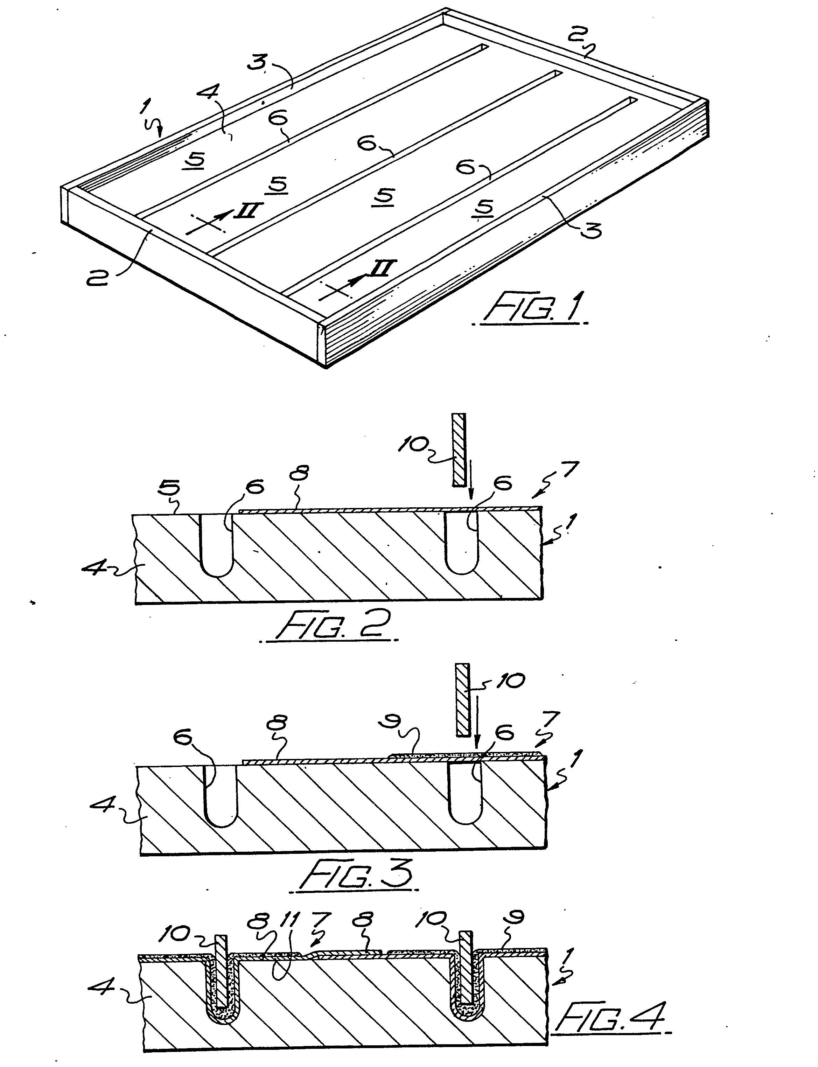

Figure 1 is a perspective view of a mould for making components in accordance with the invention;

Figure 2 is a section on the line II-II of Figure 1 showing the first stage of the manufacturing method;

Figures 3 to 6 correspond to Figure 2 but show succeeding steps of the manufacturing method;

Figure 7 shows a component manufactured by the method of Figures 1 to 6, and

Figures 8 and 9 illustrate alternative permeable reinforcing element arrangements.

In the drawings, a mould 1 for producing rectangular components comprises end walls 2 and side walls 3 defining the perimeter required for the component. The mould has a base 4 with a flat, upper surface 5 interrupted by a plurality of parallel, elongate recesses 6, three being illustrated; extending into close proximity with each end wall 2.

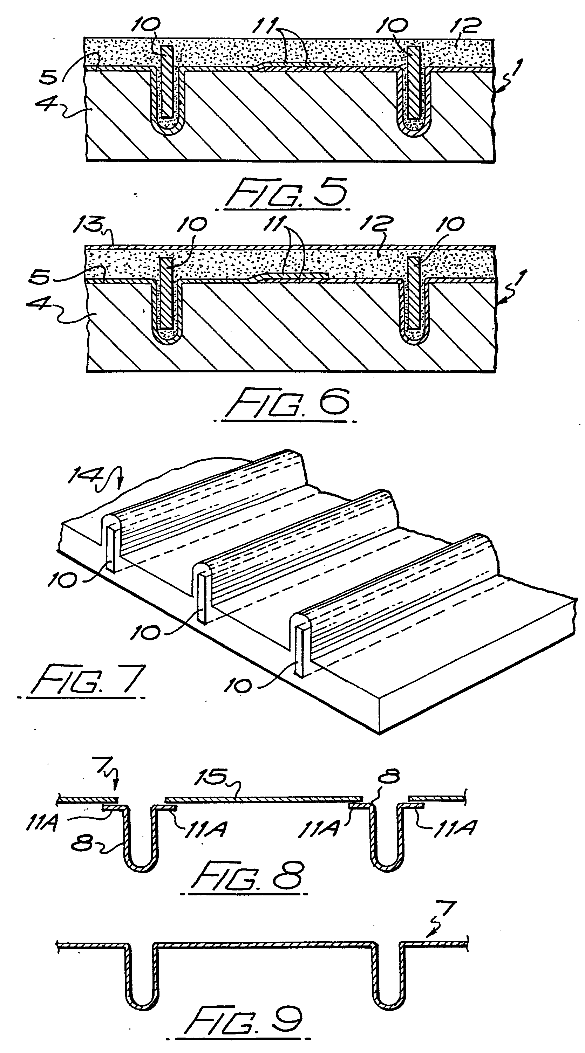

As illustrated in Figure 2, a reinforcing element 7 constituted by a plurality of individual strips 8 of fibreglass is laid over each recess 6, and as illustrated in Figure 3, a quantity 9 of flowable, filled, polyester resin mix is poured along each strip 8 so as to wet the strip. Thereafter, as illustrated in Figure 4, a metallic reinforcing bar 10 is pushed into each recess 6, this action causing a portion of each strip 8 to be pushed into its recess so as to line the latter, with strip edges 11 projecting from their recesses and lying along the upper surface 5, to such an extent that adjacent strip edges 11 overlap one another so that the reinforcing element 7 extends uninterruptedly from side-to-side of the mould 1 and terminates in close proximity to each sidewall 3. The bars 10 may be wholly contained within their recesses or may project slightly therefrom, the latter arrangement being illustrated. As indicated in Figure 5, further mix 12 is then poured into the mould so as to cover the protruding edges of the bars 10, the mix being such that the filler settles to produce a relatively filler free, upper layer readily capable of wetting a sheet 13 of fibreglass reinforcement applied as shown in Figure 6. Thereafter the resin is allowed to cure and then the finished component 14, shown in Figure 7, is removed from the mould.

In Figure 8 is illustrated an alternative overlapping technique whereby projecting strip edges 11A are of relatively small dimension and a bridging strip 15 is laid along the upper surface 5 to connect adjacent strip edges 11A and hence to ensure that the reinforcing element 7 is not interrupted.

In Figure 9 is illustrated a further alternative in which a single sheet of reinforcing element is employed and hence overlapping is unnecessary to achieve side to side continuity of the reinforcing element 7

CLAIMS:

1. A method of making a building or like component of reinforced polyester resin comprising utilising an open topped mould defining the component perimeter and having a base with a generally flat, upper surface interrupted by a plurality of parallel, elongate recesses extending substantially end-to-end of the mould; covering the recesses with a permeable reinforcing element; applying a flowable, filled polyester resin mix to the permeable reinforcing element; pressing a reinforcing bar into each slot such that each slot becomes lined with a generally "U"-shaped portion of first reinforcing element, the reinforcing element being provided in one or more pieces such that it extends uninterruptedly from side to side of the mould transversly of the reinforcing bars; applying further flowable, filled polyester resin mix to the permeable reinforcing element; and laying a second permeable reinforcing material on to the further resin mix, and allowing the component to cure before removing the component from the mould.

2.      A method as claimed in Claim 1, wherein a single sheet of reinforcing element is employed.

3.      A method as claimed in Claim 1, wherein pre-cut strips of reinforcing element are employed, the strips being of such width that, after being pressed into their respective recesses, strip edges project from the recesses and lie along the flat base, the projection being such that mutually adjacent edges overlap one another.

4.      A method as claimed in Claim 1, wherein pre-cut strips of reinforcing element are employed, the projections not overlapping and the resulting gaps being filled by bridging strips extending along the flat base and overlapping two adjacent strip edges.

5.      A method as claimed in any preceding Claim, wherein the resin includes a filler which settles upon standing.

6.      A method as claimed in any preceding Claim, wherein the mix comprises three parts ~~resin~~ filler to one part ~~filler~~ resin.

7.      A method as claimed in Claim 6, wherein the filler is silica sand.

8.      A building or like component manufactured by the method of any preceding Claim.

9.      A method of making a building or like component of reinforced polyester resin, substantially as hereinbefore described with reference to the accompanying drawings.

10.      A building or like component manufactured substantially as hereinbefore described with reference to the accompanying drawings.

112                                    0063923

FIG.1

FIG.2

FIG.3

FIG.4

_FIG.5_

_FIG.6_

_FIG.7_

_FIG.8_

_FIG.9_

European Patent
Office

EUROPEAN SEARCH REPORT

006392**3**
Application number
EP 82302054.0

## DOCUMENTS CONSIDERED TO BE RELEVANT

| Category | Citation of document with indication, where appropriate, of relevant passages | Relevant to claim |
|---|---|---|
| A | FR - A1 - 2 440 261 (KRIEG & ZIVY)<br><br>* Pages 10,11; fig. 1-6G *<br><br>-- | 1 |
| A | CH - A - 366 146 (SIEMENS-SCHUCKERTWERKE)<br><br>* Totality *<br><br>-- | |
| A | DE - A - 2 211 219 (DRAKE)<br>* Claims 1-5; fig. 1-4 *<br><br>-- | 1 |
| D,X | GB - A - 1 324 681 (FYPOL)<br>* Totality *<br><br>---- | 1,5,7-10 |

**CLASSIFICATION OF THE APPLICATION (Int. Cl. 3)**

B 29 D 3/02

**TECHNICAL FIELDS SEARCHED (Int.Cl. 3)**

B 29 D 3/00
B 29 G 5/00
B 29 G 7/00
E 04 D 1/00
E 04 D 3/00
E 04 B 1/00
E 04 C 2/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| X | | | |
| Place of search<br>VIENNA | Date of completion of the search<br>25-06-1982 | Examiner<br>HANSI | |

EPO Form 1503.1   06.78